(19) Europäisches Patentamt
European Patent Office
Office européen des brevets

(11) **EP 4 664 401 A1**

(12) **EUROPEAN PATENT APPLICATION**

(43) Date of publication:
**17.12.2025 Bulletin 2025/51**

(21) Application number: **24182071.1**

(22) Date of filing: **13.06.2024**

(51) International Patent Classification (IPC):
**G06T 7/564** *(2017.01)*

(52) Cooperative Patent Classification (CPC):
**G06T 7/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventor: **VAN GEEST, Bartholomeus Wilhelmus Damianus**
**5656 AG Eindhoven (NL)**

(74) Representative: **Philips Intellectual Property & Standards**
**High Tech Campus 52**
**5656 AG Eindhoven (NL)**

(54) **METHOD AND SYSTEM FOR DEPTH ESTIMATION**

(57) A system and method for depth estimation. Segmentation is performed on a set of 2D images of a scene, each 2D image having a different view of the scene. For at least one object identified in the segmentation, a depth value is determined for each of a plurality of pixels of the object in at least one 2D image in which the object appears by: defining an initial estimation region for the object, the initial estimation region comprising a boundary of the object as identified in the segmentation; and iteratively repeating the steps of determine a depth value for each of a plurality of pixels in a current estimation region and defining an updated estimation region for the object, until a depth value has been determined for a predetermined proportion of the object.

FIG. 2

**Description**

FIELD OF THE INVENTION

The invention relates to the field of depth estimation.

BACKGROUND OF THE INVENTION

Multi-view depth estimation methods estimate the relative 3D position of the visual elements/pixels in a scene using images of the scene captured from different viewpoints. Multi-view depth estimation is used for a wide range of applications, including synthesizing novel views for immersive video.
The quality of depth estimation is particularly important for novel view synthesis. Depth estimation of insufficient quality can result in artifacts in synthesized views, caused by inconsistencies in depth values over different views and/or over time.
There is therefore a need for depth estimation methods that provide higher quality depth information.

SUMMARY OF THE INVENTION

The invention is defined by the claims.
According to examples in accordance with an aspect of the invention, there is provided a method for depth estimation, the method comprising: obtaining a set of 2D images of a scene, each 2D image in the set having been acquired by a different camera, each camera having known intrinsic and extrinsic parameters; performing segmentation on each 2D image to identify one or more objects in each 2D image; and for at least one object in at least one 2D image: identifying, based on the segmentation, a boundary of the object; defining an initial estimation region for the object that comprises the boundary of the object; and iteratively repeating the steps of: determining a depth value for each of a plurality of pixels in a current estimation region; and defining an updated estimation region for the object, until a depth value has been determined for a predetermined proportion of the object.
The inventor has recognized that the boundary of an object has good similarity matching ability for depth estimation, and that objects typically have continuous depth distribution. Further, existing segmentation techniques are able to accurately and reliably detect object boundaries. Thus, by first performing segmentation on an image and then determining depth values for the image on a per-object basis, starting by determining depth values for the boundary of the object before determining depth values for the interior of the object, depth estimation may be simplified compared with existing methods that use complex techniques to handle discontinuities in depth, while also providing accurate and temporally stable depth information for the object.
In some examples, defining an updated estimation region for the object in an iteration comprises identifying any pixels belonging to the object that are immediately adjacent to the current estimation region and do not belong to the current estimation region or any previous estimation region.
In other words, the depth estimation for the object is carried out sequentially, working inwards from the boundary of the object to the centre of the object. This provides accurate and stable depth values for the object, reducing artifacts caused by discontinuities.
Alternatively, the updated estimation region may be determined on a row-by-row basis (e.g. starting from the row immediately below the top boundary), excluding any pixels in the row that were included in the initial estimation region.
In some examples, determining a depth value for each of a plurality of pixels in the current estimation region comprises: determining an initial depth value for each pixel; determining an updated depth value for each pixel by, for each pixel: defining, based on the initial depth value for the pixel, a set of depth values; identifying, for each depth value in the set of depth values, a corresponding region in at least one other 2D image; computing one or more similarity metrics for each depth value in the set of depth values, wherein the one or more similarity metrics for each depth value are indicative of a similarity between a region containing the pixel and the corresponding region in at least one other 2D image; and processing the set of depth values, using the one or more similarity metrics for each depth value in the set of depth values, to determine the updated depth value for the pixel.
In some examples, processing the set of depth values to determine the updated depth value for the pixel comprises computing a weighted average of the depth values in the set of depth values.
The weight(s) used in the weighted average may be determined based on a metric indicative of poor similarity and/or a selectivity parameter that biases towards the greatest similarity. These may be used in the computation in a way that gives higher weight to greater similarity.
In some examples, a range in depth values in the set of depth values is positively correlated with an expected local variance in depth for the pixel for which the updated depth value is being determined.
In some examples, the expected local variance is based on a variance in depth of a sparse set of depth values within the object.

The sparse set of depth values within the object (e.g. depth values obtained by triangulating key point correspondences) will typically be representative of variance in depth for the object.

In some examples, the expected local variance is based on a detected class for the object.

This recognizes that, for many objects, the variance in depth is characteristic of the type of object (e.g. a ball will typically have low variance in depth, while a Christmas tree will have a much higher variance).

In some examples, determining an initial depth value for each pixel in the initial estimation region comprises: identifying a set of key points for the object in the 2D image; identifying, for each key point, a corresponding key point in at least one other 2D image in the set of 2D images; for each key point, processing the key point and the at least one corresponding key point to determine a depth value for the key point; and processing the depth values for the set of key points to determine the initial depth value for each pixel in the current estimation region.

This provides a suitable initial depth value for each pixel in the object.

In some examples, the initial depth value for each pixel in the initial estimation region for the object is an average of the depth values for the set of key points for the object.

In some examples, a predetermined percentage of the lowest and highest depth values for the set of key points may be excluded from the computation of the average.

In some examples, the initial depth value for each pixel in each estimation region for an object other than the initial estimation region is determined based on a determined depth value for one or more pixels belonging to a previous estimation region for the object. For regions that do not contain an object's boundary, determining the initial depth values based on already-determined depth values for nearby pixels may provide a more accurate initial depth value.

In some examples, the method further comprises, for each of the at least one object in the at least one 2D image, repeating, for at least one further iteration, the steps of: defining an initial estimation region for the object that comprises the boundary of the object; and iteratively repeating the steps of: determining a depth value for each of a plurality of pixels in the current estimation region; and defining an updated estimation region for the object, wherein the depth value for each pixel in each estimation region is determined using the depth value determined for the pixel in a previous iteration.

This further improves the consistency of the determined depth values. These steps may be iteratively repeated until a convergence criterion is met.

In some examples, the method further comprises, before a first iteration, the 2D image is downscaled to a lower image scale; and for each further iteration, the 2D image is upscaled to a higher image scale.

Using a lower scale initially may improve convergence due to the absence of details on lower scales, the reduction of sensor noise and (where appropriate) the relative larger extent of regions used for similarity metrics.

In some examples, the method further comprises, for each of the one or more objects, determining a measure of the continuity of the depth distribution of the object; the at least one object in at least one 2D image comprises each object for which the measure of the continuity of the depth distribution of the object satisfies a predetermined condition; and the method further comprises, for each object for which the measure of the continuity of the depth distribution of the object fails to satisfy the predetermined condition, determining a 3D representation for each of a plurality of points on the object.

In some examples, the method further comprises determining a 3D representation for each of a plurality of points of any region in the set of 2D images that does not belong to any of the one or more identified objects.

Any suitable existing depth estimation method may be used to determine the depth values for pixels in each 2D image outside the identified object(s). Alternatively, any other 3D modelling technique may be used to determine a 3D model of the region within the scene.

There is also proposed a computer program product comprising computer program code means which, when executed on a computing device having a processing system, cause the processing system to perform all of the steps of the method described above.

According to examples in accordance with an aspect of the invention, there is provided a processing system for depth estimation, the processing system being configured to: obtain a set of 2D images of a scene, each 2D image in the set having been acquired by a different camera, each camera having known intrinsic and extrinsic parameters; perform segmentation on each 2D image to identify one or more objects in each 2D image; and for at least one object in at least one 2D image: define a boundary region for the object; iteratively repeat the steps of: determining a depth value for each of a plurality of pixels in a current estimation region; and defining an updated estimation region for the object, until a depth value has been determined for a predetermined proportion of the object.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a system for depth estimation, according to an embodiment of the invention;
Fig. 2 illustrates a process for estimating the depth for each pixel of an object in a 2D image;
Fig. 3 illustrates the identification of corresponding regions for each depth value in a set of depth values; and
Fig. 4 illustrates a method for depth estimation, according to an embodiment of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system and method for depth estimation. Segmentation is performed on a set of 2D images of a scene, each 2D image having a different view of the scene. For at least one object identified in the segmentation, a depth value is determined for each of a plurality of pixels of the object in at least one 2D image in which the object appears by: defining an initial estimation region for the object, the initial estimation region comprising a boundary of the object as identified in the segmentation; and iteratively repeating the steps of determine a depth value for each of a plurality of pixels in a current estimation region and defining an updated estimation region for the object, until a depth value has been determined for a predetermined proportion of the object.

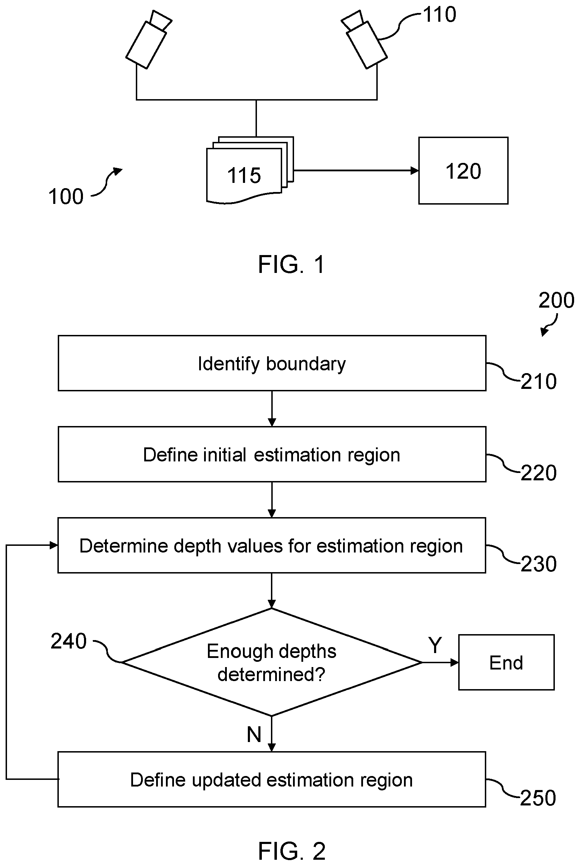

Fig. 1 illustrates a system 100 for depth estimation, according to an embodiment of the invention. The system 100 comprises a plurality of cameras 110 and a processing system 120. The processing system 120 is, itself, an embodiment of the invention.

The plurality of cameras 110 are each configured to acquire an image of a scene from a different viewpoint (i.e. each of the plurality of cameras has a different position and/or orientation to each other camera). Fig. 1 shows two cameras; however, the skilled person will appreciate that a greater number of cameras may be used in the system 100 (e.g. to provide an increased viewing space and/or to reduce a likelihood of occlusion). The number of cameras may depend on a complexity of the scene and on the application of the depth estimation. The intrinsic parameters (focal length and principle point) and extrinsic parameters (position and orientation) of each camera is known (i.e. known to the processing system 120). In some examples, a single camera used to acquire images of a static scene from different viewpoints may, for the purposes of the present disclosure, be considered to be a different camera in each position at which an image is acquired.

The processing system 120 is configured to obtain a set of 2D images 115 of a scene, each 2D image having been acquired by a respective one of the plurality of cameras 110. For illustrative purposes, Fig. 1 shows the processing system directly obtaining the set of 2D images from the plurality of cameras; however, as the skilled person will readily appreciate, the processing system may obtain the set of 2D images acquired by the plurality of cameras from another source storing the 2D images (e.g. from a memory unit).

Each 2D image in the set of 2D images 115 represents a different view of the scene. In some examples, each of the 2D images in the set of 2D images may be part of a sequence of images (i.e. a video sequence) acquired by the respective camera, such that a plurality of sets of 2D images are obtained. The processing system 120 may process each of the plurality of sets of 2D images as described below (i.e. the processing system may repeat the process for each set of 2D images).

Having obtained the set of 2D images 115, the processing system 120 is configured to perform segmentation on each 2D image to identify one or more objects in each 2D image. Segmentation for identifying object instances is well known, and any suitable segmentation algorithm (e.g. Mask-RCNN, Detectron2, etc.) may be used to identify the one or more objects in each 2D image. The segmentation algorithm may be an AI-based segmentation algorithm.

Having identified the one or more objects in each 2D image, the processing system 120 is configured to estimate a depth for each pixel of at least one object in at least one 2D image using an iterative process.

Fig. 2 illustrates the process 200 used by the processing system 120 to estimate the depth for each pixel of an object in a 2D image.

The process 200 begins at step 210, at which a boundary of the object is identified based on the segmentation. The boundary of the object may be identified by identifying all boundary pixels of the object, where a boundary pixel is a pixel identified in the segmentation as belonging to the object that is immediately adjacent to at least one pixel that is identified in the segmentation as not belonging to the object.

At step 220, an initial estimation region for the object is defined. The initial estimation region is a region comprising the boundary of the object. In some examples, the initial estimation region may contain only those pixels identified as boundary pixels. Alternatively, the initial estimation region may have a thickness of a few pixels; an upper limit on the thickness of the initial estimation region may depend on a kernel size used for similarity matching.

At step 230, a depth value is determined for each of a plurality of pixels in the current estimation region. A depth value may be determined for all pixels in the current estimation region; alternatively, interpolation may be used later to determine depth values for any pixels for which a depth value has not been determined.

In some examples, determining a depth value for each of a plurality of pixels in the current estimation region may comprise first determining an initial depth value for each of the plurality of pixels in the current estimation region, and then determining an updated depth value for each of the plurality of pixels in the current estimation region. In this way, the depth values for the pixels in the current estimation region may be refined to improve the accuracy of the determined depth values.

In some examples, the initial depth value for each pixel in the current estimation region may be determined, at least for the initial estimation region for the object in the 2D image, by identifying a set of key points for the object in the 2D image, and identifying, for each key point, a corresponding key point in at least one other 2D image in the set of 2D images. The key points and corresponding key points may, for instance, be identified by processing the set of 2D images using a SIFT (scale-invariant feature transform) algorithm, which is configured to detect the location of key points in an image and to provide an associated descriptor for each key point; the corresponding key point(s) for each key point in the set of key points may thus be identified by identifying any key points in the other 2D images having a matching descriptor.

For each key point in the set of key points for the object, the key point and the at least one corresponding key point may be processed (using the extrinsic parameters of the relevant cameras) to determine a depth value for the key point. The triangulation of key point correspondences to determine depth values is well known, and suitable methods will be apparent to the skilled person.

The depth values for the set of key points for the object may be processed to determine the initial depth value for each pixel in the current estimation region. For instance, the initial depth value for each pixel in the current estimation region may be an average of the depth values for the set of key points for the object in the 2D image. In other words, a global average depth value may be determined for the object and set as the initial depth value for each pixel in the current estimation region for the object. In some examples, a predetermined percentage (for example, 5-15%, e.g. 10%) of the lowest and highest depth values may be excluded from the computation of the average of the depth values for the set of key points, in order to improve the robustness of the average.

In some examples, where determined depth values are available for at least some pixels in the neighborhood of a pixel in the current estimation region (i.e. for estimation regions other than the initial estimation region), the initial depth value for the pixel may be determined by averaging one or more available depth values of pixels in the neighborhood of the pixel (e.g. between 1 and 8 available depth values may be used to determine the initial depth value). For instance, for each estimation region after the initial estimation region, the determined depth values for pixels in the closest previous estimation region in may be used to determine the initial depth values.

The inventor has recognized that the use of depth values determined for nearby pixels in a previous estimation region, where depth values from a previous estimation region of the object are available, provides a more accurate initial depth value than an initial depth value based on a global depth of the object obtained from key point correspondences.

In some examples, where the 2D image is part of a sequence of 2D images (e.g. a video sequence), the initial depth value may, where the depth estimation process has been performed on at least one previous 2D image in the same sequence, be determined based on a depth value for a corresponding pixel in a previous 2D image in the same sequence (e.g. an immediately preceding 2D image in the sequence).

Having determined an initial depth value for each pixel in the current estimation region, an updated depth value may be determined for each pixel in the current estimation region by, for each pixel, defining, based on the initial depth value for the pixel, a set of depth values (i.e. comprising at least two depth values), identifying, for each depth value in the set of depth values, a corresponding region in at least one other 2D image, computing one or more similarity metrics for each depth value in the set of depth values and processing the set of depth values, using the one or more similarity metrics for each depth value in the set of depth values, to determine the updated depth value for the pixel. This refinement of the depth values improves consistency of the depth values.

The set of depth values for each pixel is defined such that the initial depth value for the pixel falls within the range of the depth values in the set; in other words, the set of depth values is a set of depth values around the initial depth value. The set of depth values for each pixel may include the initial depth value for the pixel. The offsets of the depth values in the set of depth values with respect to the initial depth value may have a mean value of zero (i.e. the set of depth values may be defined such that the depth values are symmetric with respect to the initial depth value).

The range in depth values in the set of depth values may be positively correlated with an expected local variance in depth for the pixel for which the updated depth value is being determined. In other words, for a pixel having a higher expected local variance in depth, the set of depth values will have a larger range.

An expected local variance in depth for the pixel for which the updated depth value is being determined may be determined based on a variance in a sparse set of depth values within the object. The sparse set of depth values may comprise depth values for SIFT features detected in the object using a SIFT algorithm. In some examples, where a set of key points is used to determine the initial depth values for each pixel in the current estimation region, the set of key points may additionally be used to determine the expected variance. The number of depth values in the sparse set of depth values may depend on the amount of texture in the object.

Additionally or alternatively, the expected local variance in depth for the pixel for which the updated depth value is being determined may be determined based on a detected class for the object. For instance, a ball may have a lower expected variance than a person. A class for the object may be detected during segmentation, for example 'instance segmentation' algorithms yield both a object class and a segment mask.

Having defined the set of depth values for a pixel, a corresponding region in at least one other 2D image (i.e. at least one 2D image other than the 2D image containing the pixel for which the updated depth value is being determined) is identified for each depth value in the set of depth values. The corresponding region for a depth value in the set of depth values may be identified in another 2D image by using the depth value to reproject to the other 2D image to identify a corresponding pixel; the corresponding region may then be identified as a region containing the corresponding pixel.

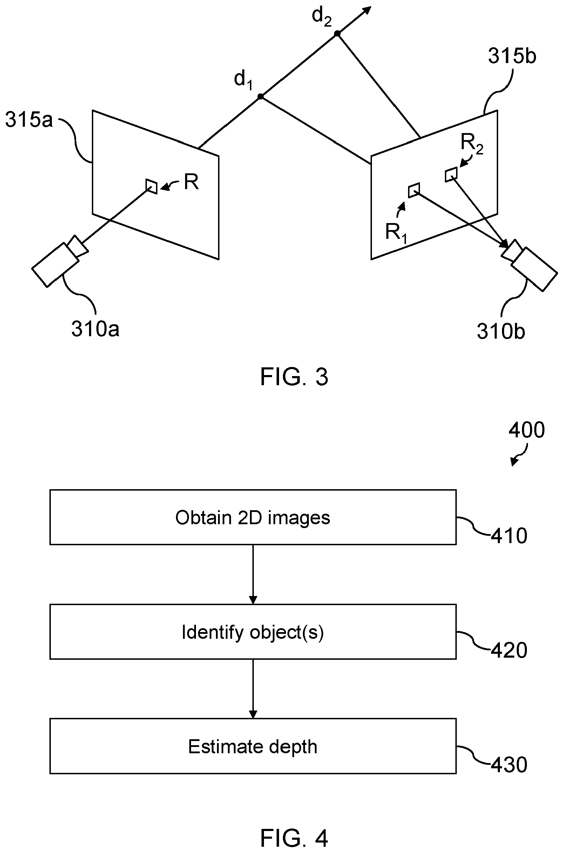

Fig. 3 conceptually illustrates the identification of corresponding regions for each depth value in a set of depth values for a pixel in 2D image 315a acquired by camera 310a. In Fig. 3, the set of depth values includes two depth values, $d_1$ and $d_2$; however, the skilled person will appreciate that the set of depth values may contain more depth values.

For each depth value $d_1$, $d_2$ in the set of depth values, the position of the camera 310a, the location of the pixel in the image 315a and the depth value are used to determine a position in 3D space (i.e. a position of a point in 3D space corresponding to the pixel if the pixel has that depth value). The position in 3D space for each depth value is then projected to image 315b, acquired by camera 310b, using the position of the camera 310b, to identify the corresponding pixel in image 315b for each depth value.

A corresponding region $R_1$, $R_2$ for each depth value $d_1$, $d_2$ is then identified as a region containing the corresponding pixel. The corresponding region may, for example, have a length of 5-13 pixels and a width of 5-13 pixels (e.g. the region may be a $5\times5$ square, a $13\times13$ square, etc.). The corresponding pixel may be centered within the respective corresponding region.

The one or more similarity metrics for each depth value in the set of depth values for a pixel may be each be a metric indicative of an amount of visual similarity between a region R of the current 2D image 315a that includes the pixel and the identified corresponding region $R_1$, $R_2$ in at least one other 2D image 315b. The region R of the current 2D image containing the pixel for which the updated depth value is being determined may be region in which the pixel is centered. The region R may, for example, have a length of 5-13 pixels and a width of 5-13 pixels (e.g. a $5\times5$ square, a $13\times13$ square, etc.). A similarity metric for each depth value in the set of depth values may be determined with respect to more than one other 2D image (e.g. with each other 2D image in the set of 2D images); the determined similarity metrics for the depth value may then be processed to obtain a single similarity metric for the depth value (e.g. a mean or a minimum of the determined similarity metrics for the depth value).

The one or more similarity metrics for each depth value, for example, may comprise one or more of: the sum of absolute differences (SAD), the sum of squared differences (SSD) and/or the structural similarity index (SSIM). Other suitable similarity metrics will be apparent to the skilled person.

In some examples, the region R of the current 2D image 315a that includes the pixel for which the updated depth value is being determined and the corresponding region $R_1$, $R_2$ in another of the 2D images used to determine the similarity metric(s) may be divided into a first sub-region containing pixels that belong to the object (according to the segmentation), and a second sub-region containing pixels that do not belong to the object (for any regions containing any pixels that do not belong to the object). The second sub-region may generally be expected to contain background pixels, which, due to parallax, are more likely to have a different photometric appearance in different views.

The similarity metric(s) may be computed by processing the first sub-region and the second sub-region differently. For instance, the contribution to the similarity metric of each pixel may depend on whether the pixel belongs to the first sub-region or the second sub-region (with a lower weight applied to pixels belonging to the second sub-region), or separate similarity metrics may be computed for the first sub-region and the second sub-region (the separate similarity metrics may then be combined, applying a lower weight to the similarity metric computed for the second sub-region).

The processing of the set of depth values using the similarity metrics to determine the updated depth value for the pixel may comprise determining a weighted average of the depth values in the set of depth values, wherein the weighted average is weighted based on the similarity metrics.

For instance, an updated depth value $d_u$ may be determined using the equation:

$$d_u = \frac{1}{\sum w_k} \cdot \sum d_k \cdot w_k \qquad (1)$$

where $d_k$ is a depth value in the set of depth values and $w_k$ is the weight for the depth value $d_k$. Each weight $w_k$ may be

determined using the similarity metrics, for instance, using the equation:

$$w_k = e^{-\alpha(s_k - s_{\min})} \qquad (2)$$

where $s_k$ is the similarity metric for the depth value $d_k$ (or, where more than one similarity metric is computed for the depth value $d_k$, a mean or minimum of the similarity metrics for the depth value $d_k$, as described above), $\alpha$ is a selectivity parameter that biases towards the greatest similarity and $s_{min}$ is a metric indicative of poor similarity (e.g. the minimum similarity metric across all depth values in the set of depth values). An initial value for the selectivity parameter may be obtained heuristically; the value of the selectivity parameter may be adjusted for any later iterations of the process 200, as described below.

In some examples, rather than first determining an initial depth value and then determining an updated depth value, the depth value for each pixel in the estimation region may be determined by performing a full search, i.e. by evaluating a continuous range of candidate depth values for the pixel (i.e. a range over all possible depths) to determine a cost value based on similarity matching. The depth values and cost values may then be processed using a depth-smoothness prior to determine the depth value for the pixel.

Returning to Fig. 2, having determined a depth value for each of a plurality of pixels in the estimation region, the process 200 proceeds to step 240, at which a check is performed as to whether a depth value has been determined for a predetermined proportion of the object. In some examples, the predetermined proportion may be 100% (i.e. the check may be as to whether a depth value has been determined for all pixels in the object). In other examples, once a depth value has been determined for the predetermined proportion of the object, a depth value may be determined for any remaining pixels using interpolation.

If depth values have not been determined for the predetermined proportion of the object, the process proceeds to step 250, at which an updated estimation region is defined for the object. In other words, the steps of determining depth values in the current estimation region and updating the estimation region are iteratively repeated until a depth value has been determined for the predetermined proportion of the object.

The updated estimation region may be defined by identifying any pixels belonging to the object that are immediately adjacent to the current estimation region and that do not belong to the current estimation region or any previous estimation region (for a current iteration of the process 200). In this way, the depth estimation process works inwards from the boundary of the object. In some examples, the updated estimation region may be defined such that the updated estimation region contains only these identified pixels. In other examples, the updated estimation region may have a thickness of a few pixels (i.e. the updated estimation region may contain pixels belonging to the object immediately adjacent to the current estimation region and other pixels connected to these pixels that do not belong to the current estimation region or any previous estimation region). In some examples, the updated depth estimation may not be immediately adjacent to the current estimation region; in other words, a gap may be left between estimation regions; depth values for pixels between estimation regions may be determined by interpolation.

In some examples, steps 220 to 250 of the process 200 may be repeated for at least one further iteration for the same object in the same 2D image (i.e. steps 220 to 250 of the process 200 may be carried out at least twice for at least one object in at least one 2D image). In other words, having determined a depth value for the predetermined proportion of the object, the initial estimation region may be returned to, and new depth value may be determined for the pixels in each estimation region in turn. Steps 250 to 220 of the process 200 may be repeated until one or more predefined conditions are met. The one or more predefined conditions may comprise a convergence criterion (e.g. that a difference between each depth value determined in a current iteration of steps 220 to 250 of the process 200 and the respective depth value determined in the most recent previous iteration of the process is below a predefined difference threshold for a predefined proportion of the pixels belonging to the object).

In each further iteration of steps 220 to 250 of the process 200, the depth value for each pixel in each estimation region is determined using the depth value determined for the pixel in the previous iteration (i.e. the most recent previous iteration). For instance, where the depth value for each pixel is determined by first determining an initial depth value for each pixel in the current estimation region and then determining an updated depth value, as described above, the initial depth value for each pixel in each further iteration may be the (updated) depth value determined for the pixel in the most recent previous iteration of steps 220 to 250 of the process 200.

In some examples, one or more parameters used in the depth estimation process may be adjusted for each further iteration of steps 220 to 250 of the process 200. For instance, where each updated depth value is determined using a set of depth values, the range in depth values in the set of depth values for each pixel in each further iteration may be decreased compared with the range for the same pixel in the most recent previous iteration (or the range for the pixel in the most recent previous iteration may be applied as an upper limit on the range for the pixel in a current iteration). Where each updated depth value is determined using a weighted average for which the computation of the weight involves a selectivity parameter, the selectivity parameter may be adjusted for each further iteration of steps 220 to 250 of the process 200 to increase selectivity towards the greatest similarity (alternatively, the same value may be used for the selectivity parameter as the previous iteration of the process).

In some examples, the 2D image with respect to which the process 200 is being performed may be upscaled to a higher image scale for each further iteration of steps 220 to 250. The depth estimations determined in the previous iteration may also be upscaled to the higher image scale.

For instance, prior to performing the process 200, the set of 2D images may be processed to generated a plurality of sets of 2D images, each set having a different image scale (e.g. by downscaling the original set to at least one lower image scale). For each object in each 2D image on which the process 200 is performed, steps 220 to 250 of the process 200 may first be performed using the lowest scale version of the respective 2D image. Steps 220 to 250 may then be repeated using the next lowest scale version of the 2D image, and so on, until the process is performed using the highest scale version of the 2D image. In some examples, steps 220 to 250 may continue to be repeated using the highest scale version of the 2D image until one or more predefined conditions (e.g. as described above) are met.

In some examples, the processing system 120 may be configured to carry out the process 200 for each object that is identified in two or more of the 2D images, in each 2D image in which the object appears.

In other examples, a check may first be performed to determine, for each of the one or more objects identified in the segmentation, a measure of the continuity of the depth distribution of the object. The process 200 may then be performed on any object for which the measure of the continuity of the depth distribution of the object satisfies a predetermined condition (i.e. a condition requiring that the object has a sufficiently continuous depth). For any object for which the measure of the continuity of the depth distribution of the object fails to satisfy the predetermined condition, a 3D representation for each of a plurality of points on the object in the scene may be determined using an alternative method (e.g. existing depth estimation techniques may be used to determine a depth value for each pixel belonging to the object in each 2D image in which the object appears, or other 3D modelling techniques, such as techniques involving neural radiance field models or 3D Gaussian splatting, may be used to generate a 3D model of the object within the scene).

The measure of the continuity of the depth distribution of the object may be a measure of the continuity of a depth distribution of a sparse set of depth values (e.g. SIFT features) for the object. The measure of the continuity of the depth distribution of the object may additionally or alternatively be based on a detected object class for the object (e.g. as identified in the segmentation); for instance, an object identified as a ball may be determined as having a more continuous depth distribution, while an object identified as a Christmas tree may be determined as having a less continuous depth distribution.

If any object is identified in only one 2D image in the set of 2D images, depth values for a plurality of points on the object may be determined using heuristics (for instance, if an object is attached to another object/another image feature for which depth values have been determined, these depth values may be used to determine the depth of the object).

Each 2D image will typically contain one or more regions that do not belong to an object identified in the segmentation (e.g. background regions). In some examples, the processing system 120 may be further configured to determine a 3D representation for each of a plurality of points of any region in the set of 2D images that does not belong to any of the one or more identified objects. For instance, any existing depth estimation technique may be used to determine a depth value for any pixel in the set of 2D images that does not belong to any of the one or more identified objects. Alternatively, a 3D modelling technique that does not use depth maps (such as neural radiance field-based techniques, or 3D Gaussian splatting) may be used to generate, for any region of the scene appearing in the set of 2D images that does not belong to any of the one or more identified objects, a 3D model of the region within the scene.

Fig. 4 illustrates a method 400 for depth estimation, according to an embodiment of the invention.

The method 400 begins at step 410, in which at set of 2D images of a scene is obtained. Each 2D image in the set is acquired by a different camera, each camera having known intrinsic and extrinsic parameters.

At step 420, segmentation is performed on each 2D image to identify one or more objects in each 2D image.

At step 430, the depth of each pixel of at least one object in at least one 2D image is determined, by carrying out the process 200 described above with respect to Fig. 2 (i.e. by identifying, based on the segmentation, a boundary of the object, defining an initial estimation region for the object comprising the boundary of the object, and iteratively repeating the steps of determining a depth value for each pixel in the current estimation region and defining an updated estimation region for the object, until a depth value has been determined for to the predetermined proportion of the object).

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A method (400) for depth estimation, the method comprising:

    obtaining a set of 2D images (115, 315a, 315b) of a scene, each 2D image in the set having been acquired by a different camera (110, 310a, 310b), each camera having known intrinsic and extrinsic parameters;
    performing segmentation on each 2D image to identify one or more objects in each 2D image; and
    for at least one object in at least one 2D image:

        identifying, based on the segmentation, a boundary of the object;
        defining an initial estimation region for the object that comprises the boundary of the object; and
        iteratively repeating the steps of:

            determining a depth value for each of a plurality of pixels in a current estimation region; and
            defining an updated estimation region for the object,

        until a depth value has been determined for a predetermined proportion of the object.

2. The method (400) of claim 1, wherein defining an updated estimation region for the object in an iteration comprises identifying any pixels belonging to the object that are immediately adjacent to the current estimation region and do not belong to the current estimation region or any previous estimation region.

3. The method (400) of claim 1 or 2, where determining a depth value for each of a plurality of pixels in the current estimation region comprises:

determining an initial depth value for each pixel;
determining an updated depth value for each pixel by, for each pixel:

defining, based on the initial depth value for the pixel, a set of depth values ($d_1$, $d_2$);
identifying, for each depth value in the set of depth values, a corresponding region ($R_1$, $R_2$) in at least one other 2D image (310b);
computing one or more similarity metrics for each depth value in the set of depth values, wherein the one or more similarity metrics for each depth value are indicative of a similarity between a region (R) containing the pixel and the corresponding region in at least one other 2D image; and
processing the set of depth values, using the one or more similarity metrics for each depth value in the set of depth values, to determine the updated depth value for the pixel.

4. The method (400) of claim 3, wherein processing the set of depth values ($d_1$, $d_2$ to determine the updated depth value for the pixel comprises:
computing a weighted average of the depth values in the set of depth values.

5. The method (400) of claim 3 or 4, wherein a range of depth values in the set of depth values ($d_1$, $d_2$) is positively correlated with an expected local variance in depth for the pixel for which the updated depth value is being determined.

6. The method (400) of claim 5, wherein the expected local variance is based on a variance in depth of a sparse set of depth values within the object.

7. The method (400) of claim 5, wherein the expected local variance is based on a detected class for the object.

8. The method (400) of any of claims 3 to 7, wherein determining an initial depth value for each pixel in the initial estimation region comprises:

identifying a set of key points for the object in the 2D image (115, 315a);
identifying, for each key point, a corresponding key point in at least one other 2D image (315b) in the set of 2D images;
for each key point, processing the key point and the at least one corresponding key point to determine a depth value for the key point; and
processing the depth values for the set of key points to determine the initial depth value for each pixel in the current estimation region.

9. The method (400) of any of claims 3 to 8, wherein the initial depth value for each pixel in each estimation region for an object other than the initial estimation region is determined based on a determined depth value for one or more pixels belonging to a previous estimation region for the object.

10. The method (400) of any of claims 1 to 9, further comprising, for each of the at least one object in the at least one 2D image (115, 315a, 315b), repeating, for at least one further iteration, the steps of:

defining an initial estimation region for the object that comprises the boundary of the object; and
iteratively repeating the steps of:

determining a depth value for each of a plurality of pixels in the current estimation region; and
defining an updated estimation region for the object,

wherein the depth value for each pixel in each estimation region is determined using the depth value determined for the pixel in a previous iteration .

11. The method (400) of claim 10, wherein:

the method further comprises, before a first iteration, the 2D image (115, 315a, 315b) is downscaled to a lower image scale; and
for each further iteration, the 2D image is upscaled to a higher image scale.

12. The method (400) of any of claims 1 to 11, wherein:

the method further comprises, for each of the one or more objects, determining a measure of the continuity of the depth distribution of the object;

the at least one object in at least one 2D image comprises each object for which the measure of the continuity of the depth distribution of the object satisfies a predetermined condition; and

the method further comprises, for each object for which the measure of the continuity of the depth distribution of the object fails to satisfy the predetermined condition, determining a 3D representation for each of a plurality of points on the object.

13. The method (400) of any of claims 1 to 12, further comprising determining a 3D representation for each of a plurality of points of any region in the set of 2D images that does not belong to any of the one or more identified objects.

14. A computer program product comprising computer program code means which, when executed on a computing device having a processing system, cause the processing system to perform all of the steps of the method (400) according to any one of claims 1 to 13.

15. A processing system (120) for depth estimation, the processing system being configured to:

obtain a set of 2D images (115, 315a, 315b) of a scene, each 2D image in the set having been acquired by a different camera (110, 310a, 310b), each camera having known intrinsic and extrinsic parameters;

perform segmentation on each 2D image to identify one or more objects in each 2D image; and

for at least one object in at least one 2D image:

define a boundary region for the object;

iteratively repeat the steps of:

determining a depth value for each of a plurality of pixels in a current estimation region; and

defining an updated estimation region for the object,

until a depth value has been determined for a predetermined proportion of the object.

FIG. 1

FIG. 2

FIG. 3

FIG. 4

Europäisches
Patentamt
European
Patent Office
Office européen
des brevets

## EUROPEAN SEARCH REPORT

**Application Number**

EP 24 18 2071

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/300590 A1 (BRIGGS FORREST SAMUEL [US] ET AL) 18 October 2018 (2018-10-18) | 1,3-5, 7-11, 13-15 | INV. G06T7/564 |
| Y | * abstract; figure all * * paragraphs [0008], [0061], [0094], [0097], [0108], [0109], [0113] - [0119], [0100] * | 2,6,12 | |
| Y | US 2023/410337 A1 (PUGH BRIAN [US] ET AL) 21 December 2023 (2023-12-21) * abstract; figure all * * paragraphs [0026], [0028], [0041], [0075] * | 2,6,12 | |
| A | US 2019/197713 A1 (BABON FREDERIC [FR] ET AL) 27 June 2019 (2019-06-27) * the whole document * | 1-15 | |

**TECHNICAL FIELDS SEARCHED (IPC)**

G06T

The present search report has been drawn up for all claims

| Place of search | Date of completion of the search | Examiner |
|---|---|---|
| The Hague | 28 October 2024 | Winne, Dominique |

EPO FORM 1503 03.82 (P04C01)

# EP 4 664 401 A1

## ANNEX TO THE EUROPEAN SEARCH REPORT
## ON EUROPEAN PATENT APPLICATION NO.

EP 24 18 2071

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | | Publication date | Patent family member(s) | | Publication date |
|---|---|---|---|---|---|
| US 2018300590 | A1 | 18-10-2018 | US | 10540576 B1 | 21-01-2020 |
| | | | US | 2018300590 A1 | 18-10-2018 |
| | | | US | 2018300892 A1 | 18-10-2018 |
| | | | US | 2018300893 A1 | 18-10-2018 |
| | | | US | 2018300894 A1 | 18-10-2018 |
| | | | US | 2018300957 A1 | 18-10-2018 |
| | | | US | 2018302550 A1 | 18-10-2018 |
| | | | US | 2018302614 A1 | 18-10-2018 |
| US 2023410337 | A1 | 21-12-2023 | CA | 3158287 A1 | 20-05-2021 |
| | | | EP | 4058983 A1 | 21-09-2022 |
| | | | US | 2021142497 A1 | 13-05-2021 |
| | | | US | 2023410337 A1 | 21-12-2023 |
| | | | WO | 2021097126 A1 | 20-05-2021 |
| US 2019197713 | A1 | 27-06-2019 | EP | 3506205 A1 | 03-07-2019 |
| | | | EP | 3506206 A1 | 03-07-2019 |
| | | | US | 2019197713 A1 | 27-06-2019 |

EPO FORM P0459

For more details about this annex : see Official Journal of the European Patent Office, No. 12/82

15